# EUROPEAN PATENT APPLICATION

(11) **EP 1 024 485 A2**
(43) Date of publication of application: **02.08.2000**
(21) Application number: 00101582.5
(22) Date of filing: 27.01.2000
(51) Int. Cl.: G11B 17/04

(54) **Cartridge transporting apparatus**

(30) Priority: 29.01.1999 JP 2197699
(71) Applicant: Pioneer Corporation, Tokyo 153-0063 (JP)
(72) Inventor: Shimizu, Takashi, c/o Pioneer Corporation, Kawagoe-shi, Saitama 350-0822 (JP); Satoh, Takashi, c/o Pioneer Corporation, Kawagoe-shi, Saitama 350-0822 (JP); Takemasa, Kaoru, c/o Pioneer Corporation, Kawagoe-shi, Saitama 350-0822 (JP)
(74) Representative: Grünecker, Kinkeldey, Stockmair & Schwanhäusser Anwaltssozietät

(57) **Abstract**

In a cartridge transporting apparatus, a driving roller is provided in the vicinity of a cartridge inlet. The driving roller serves to transport the cartridge into a cartridge holder. A shutter opening/closing means is engaged with a shutter covering an opening of said cartridge. The shutter opening/closing means serves to open or close said shutter as said cartridge is moved. The driving roller is located at a position where it is not brought in contact with the shutter when said shutter is engaged with said shutter opening/closing means. In such a configuration, the cartridge can be transported reliably and accurately. The opening or closing of the shutter can be made surely.

## Description

### BACKGROUND OF THE INVENTION

### 1. Field of the Invention

The present invention relates to a reproducing apparatus and a recording/reproducing apparatus using a cartridge such as MD (minidisk) or MO (magneto-optic disk), particularly to a cartridge transporting apparatus for transporting a cartridge between a prescribed input/output position and a recording/reproducing position.

### 2. Description of the Related Art

Previously known is a cartridge having a structure in which a recording/reproducing medium such as a MD, MO, etc. is housed in a cartridge case. A conventional reproducing apparatus using such a cartridge is disclosed in JP-A-8-315481.

In the conventional reproducing apparatus, when a cartridge is inserted into an inlet provided at an input/output position by a user, a cartridge transporting mechanism automatically starts a loading operation so that the cartridge being held in a cartridge holder is horizontally transported to a prescribed position in a reproducing apparatus. Thereafter, the cartridge and cartridge holder which are held integrated are dropped into a prescribed reproducing position so that the cartridge is clamped there.

In the cartridge transporting mechanism attached to the conventional reproducing apparatus, the cartridge is horizontally transported to the above prescribed position by rotating a roller by a driving motor while it is in contact with the side wall or edge of the cartridge inserted from the insertion opening.

In this case, since a contact area between the roller and the side wall of the cartridge is small, the contact face of the roller wears and becomes liable to slip. The secular change due to the wear might reduce the reliability of the transportation.

This makes it impossible to position the cartridge at a prescribed recording/reproducing position so that the cartridge may be clamped in a slanted state. Thus, the clamping region which is centrally formed on the recording/reproducing medium is held displaced at a turn table located at the recording/reproducing position. Therefore, the recording/reproducing face of the recording/reproducing medium is brought into contact with the inner wall of the cartridge so that the recorded information may be damaged during reproducing.

The present invention has been accomplished in order to obviate such an inconvenience.

An object of the present invention is to provide a cartridge transporting apparatus which can transport a cartridge to a prescribed reproducing position surely and accurately.

In order to attain the above object, in accordance with an aspect of the present invention, there is provided a cartridge transporting apparatus comprising: a cartridge holder for loading a cartridge with a recording medium which is inserted from an inlet; a reproducing means including a turn table and a pick-up, said cartridge holder and said reproducing means being moved relatively so that the cartridge loaded in the cartridge holder can be reproduced; a driving roller, provided in the vicinity of said insertion opening, for transporting said cartridge in its contact with a lower face or upper surface of the cartridge into said cartridge holder, a shutter opening/closing means engaged with a shutter covering an opening of said cartridge, for opening/closing said shutter as said cartridge is moved, wherein said driving roller is located at a position where it is not brought in contact with the shutter when said shutter is engaged with said shutter opening/closing means.

In accordance with another aspect of the present invention, there is provided a cartridge transporting apparatus comprising: a cartridge holder for loading a cartridge with a recording medium which is inserted from an inlet; a reproducing means including a turn table and a pick-up, said cartridge holder and said reproducing means being moved relatively so that the cartridge loaded in the cartridge holder can be reproduced; a driving roller, provided in the vicinity of said insertion opening, for transporting said cartridge in its contact with a lower face or upper surface of the cartridge into said cartridge holder, a shutter opening/closing means engaged with a shutter covering an opening of said cartridge, for opening/closing said shutter as said cartridge is moved, wherein said driving roller is located at a position where it is brought in contact with the shutter after said shutter passes said driving roller.

In accordance with the present invention, when a cartridge is carried into the side of the driving roller by a user, the driving roller rotates in contact with the lower or upper surface of the cartridge to carry the cartridge into a cartridge holder. This provides sufficient contact between the driving roller and the cartridge so that the shutter can be opened or closed surely, and the cartridge can be loaded to a recording/reproducing position reliably and accurately.

Since the driving roller is adapted so that it does not affect the opening/closing of a shutter, it is possible to prevent an accident that the recording/reproducing medium in a cartridge is damaged as a result that the shutter is opened while the cartridge is transported.

The above and other objects and features of the present invention will be more apparent from the following description taken in conjunction with the accompanying drawings.

### BRIEF DESCRIPTION OF THE DRAWINGS

Fig. 1 is a plan view of the structure of a cartridge transporting apparatus according to the present invention;
Figs. 2A and 2B are plan views showing the structure of a cartridge;
Figs. 3A and 3B are a side view and a plan view of a cartridge structure;
Figs. 4A - 4C are plan views showing the structure of each of a cartridge holder and steering member;
Figs. 5A - 5E are side views of a cartridge holder, steering member and rack member, respectively;
Fig. 6 is a side view showing the structure of a holder transporting mechanism;
Figs. 7 to 10 are views for explaining the operation of the cartridge transporting apparatus according to the present invention; and
Figs. 11 - 15 are views for explaining the opening/shutting of a shutter.

### DESCRIPTION OF THE PREFERRED EMBODIMENTS

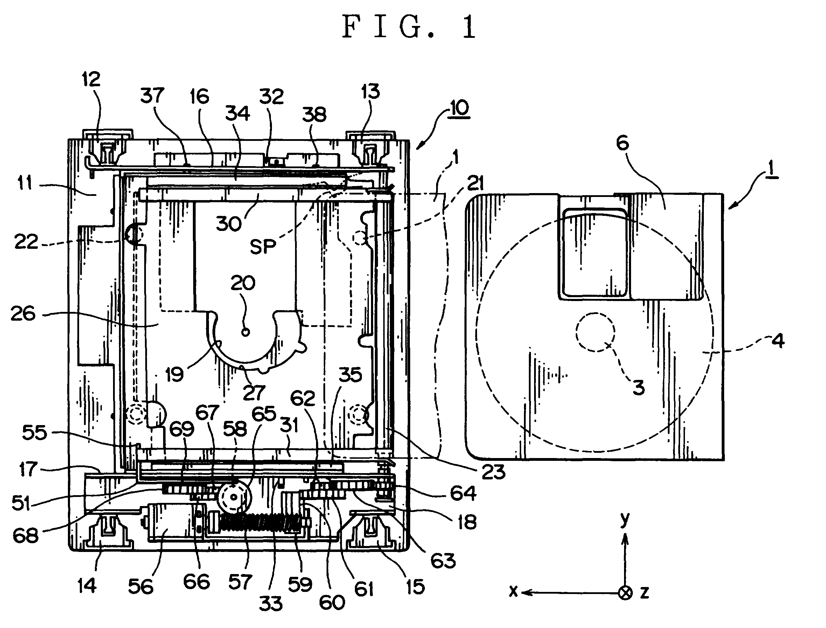

Now referring to Figs. 1 - 15, an explanation will be given of various embodiments of a cartridge transporting apparatus which is applied to a recording/reproducing apparatus using an MD cartridge (hereinafter referred to as "cartridge") . In these figures, the explanation will be made assuming that the direction of carrying in the cartridge is an x direction, that of clamping the cartridge is a z direction and that orthogonal to the x direction and z direction is a y direction.

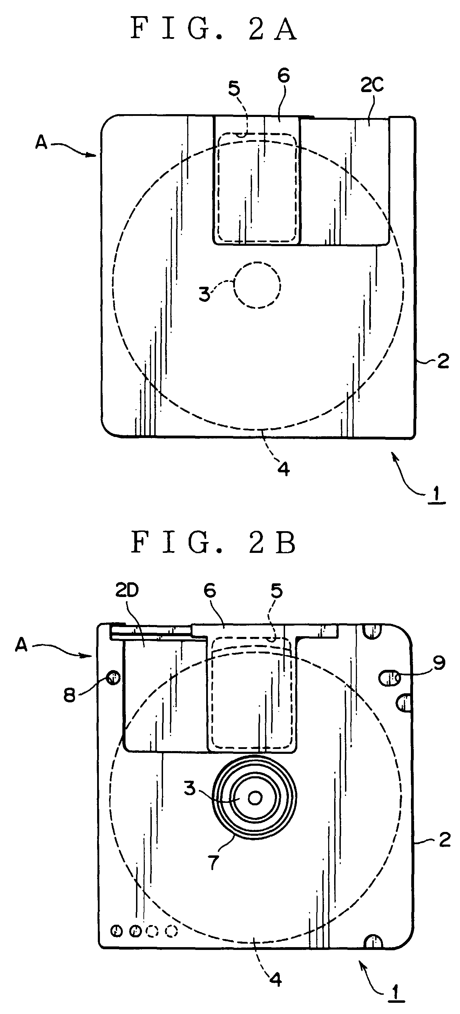

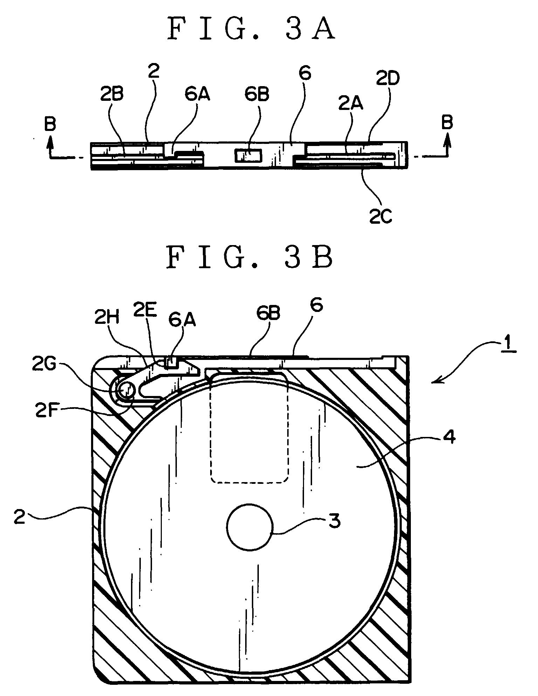

First, referring to Figs. 2 and 3, an explanation will be given of the structure of a cartridge 1. Fig. 2A is a plan view of the cartridge when viewed from the surface side. Fig. 2B is a plan view of the cartridge when viewed from the back side. Fig. 3A is a side view in a direction of A of Fig. 2B. Fig. 3B is a sectional view taken in line B - B in Fig. 3A. In Figs. 2 and 3, the cartridge has a structure based on a prescribed standard in which a disk-shaped recording/reproducing medium 4 supported by a circular clamping region 3 is housed in a cartridge case 2 with resin-molded square shells superposed on each other.

The cartridge case 2 includes, on its back side, a square opening 5 from which the one side of the recording/reproducing medium 4 during recording/reproducing is exposed, a shutter 6 for protecting the recording/reproducing medium 4 by covering the opening 5 during the other period than the reproducing, a circular supporting hole 7 for rotatably supporting the clamping region 3 and positioning holes 8 and 9 for positioning the cartridge 1 at a prescribed reproducing position in a reproducing apparatus.

The shutter 6 slides within an concave area 2C formed on the front surface of the cartridge case 2 and formed on the back surface thereof to open/close an opening 5.

On the side wall of the shutter 6, as shown in Fig. 3, a stopper for 6A for stopping the open of the shutter 6 is provided to protrude in a direction of carrying in the cartridge 2.

On the side wall of the shutter 6, an engagement hole 6B is provided which is to be engaged with an engagement spring 24A attached to a cartridge holder 24 (described later).

Further, on the side wall of the cartridge case 2, guide grooves 2A and 2B are formed for guiding the movement of the shutter 6. The above stopper 6A is movably guided by the guide groove 2B.

As shown in Fig. 3B, the cartridge 2 is provided with a stopper portion 2F having an engagement concave portion 2E in its interior. The engagement concave portion 2E is to be engaged with the stopper 6A for the shutter 6 is provided. The engagement portion 2F, which is made of an elastic material, is pivoted on a rotary shaft 2G. When a slanted plane 2H is pressed, the engagement concave portion 2E is depressed so that it is disengaged from the stopper 6A.

Fig. 1 is a plan view of the cartridge transporting 10 which is applied to a recording/reproducing apparatus using an cartridge 1. In Fig. 1, fixing members 12 -15 having oscillation-proofing structure for fixing the cartridge transporting apparatus are attached at four positions of the bottom of a square hard frame 11.

A first side plate 16, which is perpendicular to the bottom face of the hard frame 11, is attached to the fixing members 12 and 13, whereas a supporting member 18 for supporting a second side plate 17, which is perpendicular to the bottom face of the hard frame 11, is attached to the fixing members 14 and 15. In this way, the first and the second side plate 16 and 17 are arranged in parallel in the x-direction.

On the bottom face of the hard frame 11, a through-hole 19 is made for exposing a pick-up for read information and its moving mechanism, and a turn table (not shown) upward in a z-direction. The turn table serves to mount the clamping region 3 of the cartridge 1 for reproducing and to rotate it. These pick-up and turn table constitute a reproducing means. The rotary center position of the turn table is indicated by reference numeral 20.

Projections 21 and 22 are uprighted apart by a prescribed interval therebetween upward from the bottom of the hard frame 11 so that they are adapted to be engaged with the holes for positioning the cartridge.

At the side edge of the hard frame 11, a driving roller 23 is provided which is perpendicular to the first and the second side plate 16 and 17. The driving roller 23 having the same length as the width (i. e. length in the y-direction) of the cartridge 1 is formed in a shape of circular cylinder with a metallic rotary shaft which is covered with hard rubber having a friction resistance on its circumferencial face. The driving roller 23 are rotatably supported at both ends of the rotary shaft. The contact area between the driving roller 23 and the cartridge can be assured sufficiently to reduce anxiety of slip. The driving roller 23 is arranged on the second side plate 17. The driving roller, which serves to transport the cartridge 1, is arranged at a position which does not influence the opening/closing of the shutter 6.

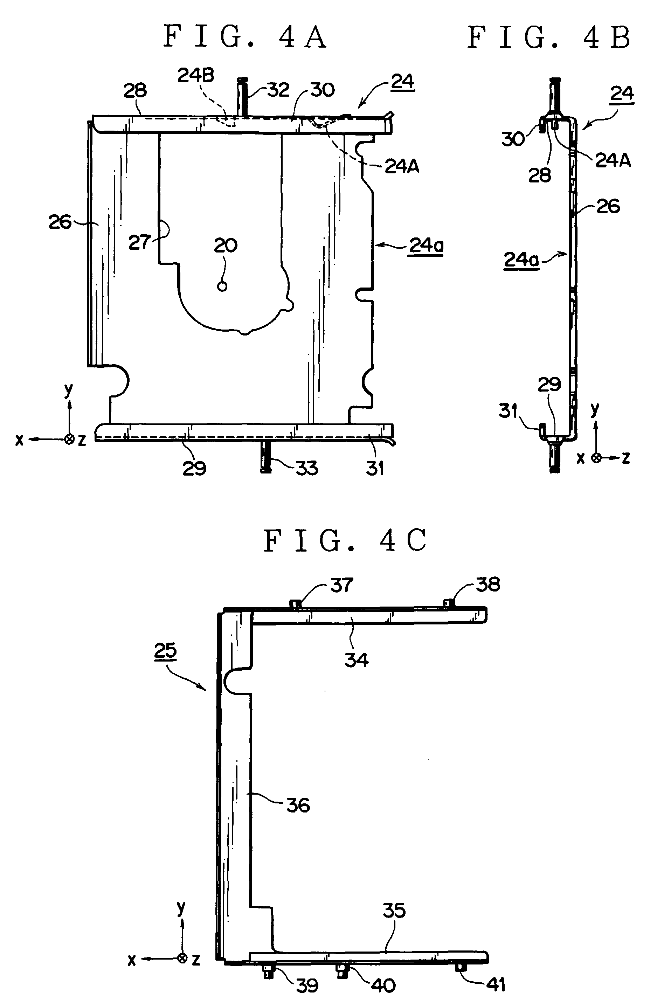

As seen from the plan view of Fig. 4A, above the hard frame 11 between the first and the second side plate 16 and 17, a square cartridge holder 24 is arranged. As seen from the plan view of Fig. 4C, a steering member 24 is arranged between the outer walls of the cartridge 24 and the inner walls of the first and the second side plate 16 and 17.

In a bottom wall of the cartridge holder 24, a through-hole 27 is made for exposing the turn table in such a manner that it overlaps the through-hole 27 for exposing the turn table. On both sides of the bottom wall 26 in the y-direction, as seen from the side view of Fig. 4B, the cartridge holder 24 has side walls 28 and 29 each having a prescribed height and visors 30 and 31 attached to upper ends the side walls 28 and 29 inwardly. The side walls 28, 29 and visors 30, 31 are integrally molded to the bottom wall 26 by the technique such as bending. The cartridge holder 24 has engagement projections 32 and 33 oriented outwardly in the y-direction at the prescribed positions of the side walls 28 and 29.

The side wall 28 is provided with an engagement spring 24A to be engaged with the engagement hole 6B of the shutter 6 and an engagement releasing piece 24B which slides within the guide groove 2B of the cartridge case 2 and also slides the slanted face 2H of the stopper portion 2F to be depressed. Thus, the shutter 6 can be opened/closed in accordance with the carry-in/out operation of the cartridge 1.

The cartridge 1 is adapted to be inserted horizontally from a carry-in/out position on the side of the driving roller 23 into a square gap 24a defined by the bottom wall 26, side walls 28, 29 and visors 30, 31. In this case, the cartridge 1 is adapted to be inserted in such a fashion that its bottom face (rear face) is oriented toward the driving roller 23.

As seen from Fig. 4C, the steering member 25 includes a first arm 34 which intervenes between the first side plate 16 and the side wall 28 of the cartridge holder 24, a second arm which intervenes between the second side plate 17 and the side wall of the cartridge holder 24, and a coupling member 36 coupling these first and second arms 34 and 35 with each other. The first and the second arm 34 and 35 have a plurality of engagement projections 37, 38, 39, 40 and 41 which protrude inwardly in the y-direction at the prescribed positions of the arms 34 and 35.

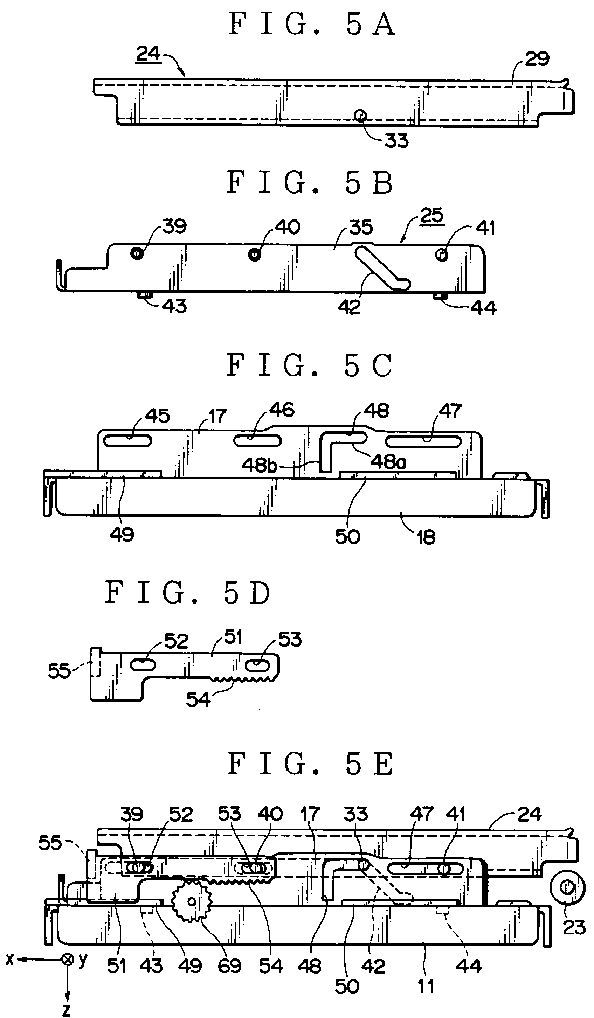

As seen from the side view of Fig. 5B, the second arm 35 of the steering member 25 has a pair of guiding projections 43 and 44 which protrude from the bottom thereof. The second arm 35 has a slanted guiding hole 42 slanted on the skew for the x-direction and y-direction.

As seen from the side view of Fig. 5C, the second side plate 17 has lengthy engagement holes 45, 46 and 47 in the x-direction and an inverted-L shaped guide hole 48. The supporting member 18 has guide members 49 and 50 for guiding the steering member 25 back and forth in the x-direction while they are engaged with the guiding protrusions 43 and 44.

The engagement projections 39, 40 and 41 of the second arm 35 are fit in the engagement holes 45, 46 and 47. The engagement projection 33 of the cartridge holder 24 as shown from the side view of the Fig. 5A is fit in the hole formed when the slanted guide hole 42 of the second arm 35 and the inverted L-shaped guide hole 48 of the second side plate 17 overlap. Thus, the cartridge 24 and the second arm 35 of the steering member 25 are combined with the second side plate 17.

The inverted-L shaped guide hole 48 is composed of a first lengthy hole component 48a and a second lengthy hole component 48b, which are integrated to each other. The first lengthy hole component 48a has a length which permits the engagement projection 33 to be movable within a prescribed distance in an x-direction. The second lengthy hole component 48b has a length which permits the engagement projection 33 to be movable up and down within a prescribed distance in a z-direction. The slanted guide hole 42 is slanted over the length of the second lengthy hole component 48b of the inverted-L shaped guide hole 48. More specifically, the length of the first lengthy hole component 48a in the x-direction is made approximately equal to a moving distance over which the cartridge holder 24 is moved to a reproducing position in loading (described later). The length of the second lengthy hole component 48c in the z-direction is made approximately equal to a clamping distance over which the cartridge holder 24 is clamped to the reproducing position.
The slanted guide hole 42 is designed with respect to its slanting angle and length so that the engagement projection is movable in the first and the second lengthy guide hole 48a and 48b.

The engagement projection 33 is fit in the above slanted guide hole 42 and inverted-L shaped guide hole 48. Therefore, when the engagement projection 33 resides in the first lengthy hole component 48a, if the steering member 25 moves in the x-direction, the engagement projection 33 moves in the x-direction under control by the first lengthy hole component 48a. On the other hand, when the engagement projection 33 resides in the second lengthy hole component 48b, if the steering member 25 moves in the x-direction, the engagement projection 33 moves up and down in the z-direction according to the overlapping position of the second lengthy hole component 48b and the slanted guide hole 42.

Incidentally, engagement holes 45, 46 and 47 are made for supporting engagement protrusions 39, 40, 41, respectively. Therefore, the engagement holes 45, 46 and 47 are designed to have a length permitting the steering member 25 to be movable within a range in the x-direction of the first lengthy hole component 48a.

Although not shown, the first arm 34 of the steering member 25 also has a slanted guide hole similar to the slanted guide hole 42 of the second arm 35. The first side plate 16 also has engagement holes and an inverted-L shaped guide hole similar to the engagement holes 45 - 47 and the inverted-L shaped guide hole 48 of the second side plate 17. The cartridge holder 24 and first arm 34 of the steering member 25 are combined with the first side plate 16 in such a manner that the engagement projections 32, 37 and 38 are fit in the slanted guide hole, engagement hole and inverted-L shaped guide hole on the side of the first side plate 16 and first arm 34. Therefore, when the steering member 25 moves in the x-direction, the cartridge holder 24 can move with no slant nor rattle.

A rack member 51 as shown in Fig. 5D is arranged on the outside of the second side plate 17. The rack member 51 has elliptical eccentric holes 52, 53, gear 54 and a contact hole 55 which extends to the inside of the cartridge holder 24. The rack member 51 is arranged on the outside of the second side plate 17 in such a manner that the engagement projections 39 and 40 are fit in the eccentric holes 52 and 53 as shown in Fig. 5E. Incidentally, the length of each of the eccentric holes 52 and 53 of the rack member 51 is designed to be equal to the maximum apart distance between a gear 69 and a gear portion 54 which will be described later.

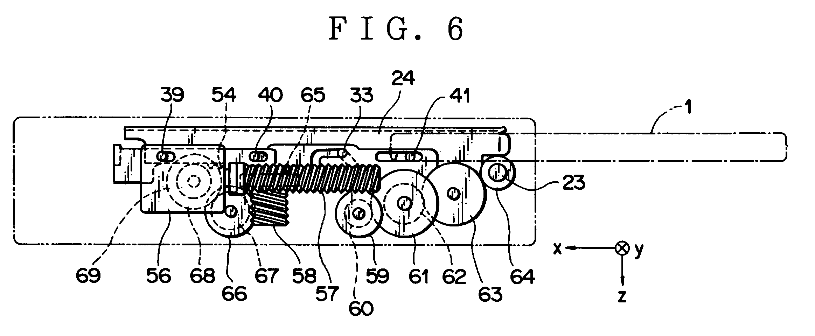

Now referring to Figs. 1 and 6, an explanation will be given of the holder transporting mechanism for loading and unloading the cartridge 1. Fig. 6 is a side view of the holder transporting mechanism seen from the side of the second side plate.

The holder transporting mechanism is supported by a supporting member 18 and is provided with a driving motor 56 and plural worm gears 57, 58 and gears 59 - 69. Specifically, the gear 59 is engaged with the worm gear 57 coupled with the driving shaft of the driving motor 56. The gear 61 is engaged with the small-diameter gear 60 integrated with the gear 59. The gear 63 is engaged with the small-diameter gear 62 integrated with the gear 61. Further, the gear 64 fixed to the rotary shaft of the driving roller 23 is engaged with the gear 63.

The gear 65 is engaged with the worm gear 57. The gear 66 is engaged with the worm gear 58 integrated with the gear 65. The gear 68 is engaged with the small-diameter gear 67 integrated with the gear 66. Further, the small-diameter gear 69 integrated with the gear 68, as seen from Fig. 5, is located at a position where the small-diameter gear 69 is apart by the maximum apart distance from the gear portion 54 when the rack 51 moves rightmost under control by the eccentric holes 52 and 53.

In the holder transporting mechanism having such a structure, when the worm gear 57 is normally rotated by the driving force of the driving motor 56, the gears 59 - 64 operate in an interlock therewith so that the drive roller 23 is rotated normally. At the same time, the worm gear 58 and gears 66 - 69 operate via the gear 65 engaged with the worm gear 57 so the gear 69 is rotated normally. On the other hand, when the worm gear 57 is rotated inversely by the driving force of the driving motor 56, the drive roller 23 and gear 69 are rotated inversely.

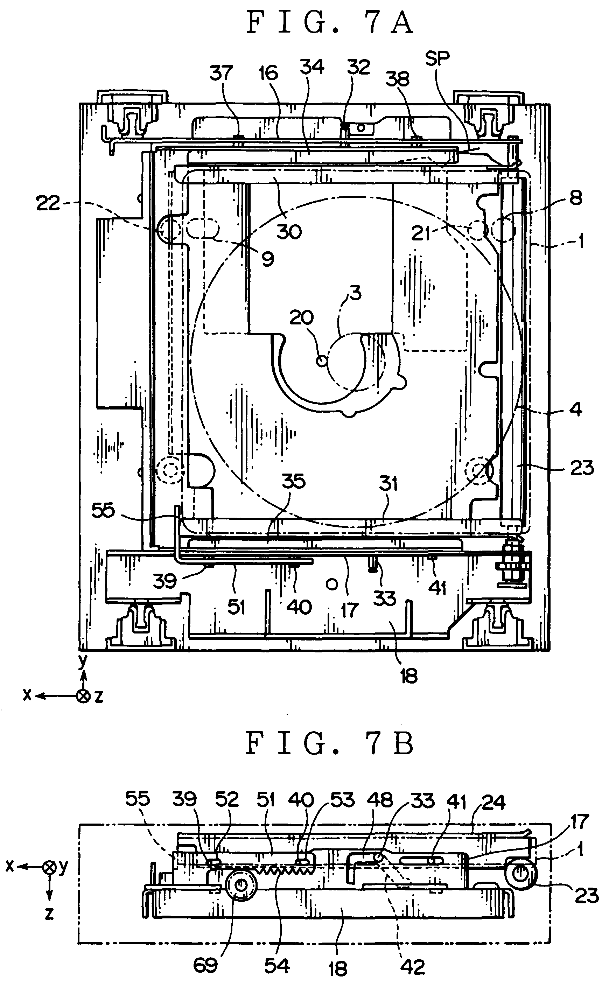

Referring to Figs. 7 - 10, an explanation will be given of the loading operation of the cartridge transporting apparatus 10 according to this embodiment. In these figures, Figs. 7A, 8A, 9A and 10A are plan views of the cartridge transporting apparatus 10 when seen from above, while Figs. 7B, 8B, 9B and 10B are side views of the cartridge transporting apparatus when seen from the side of the rack 51 in which the holder transporting mechanism except the gear 69 is not shown. The operation will be explained typically of the cartridge holder 24, steering member 25 and rack member 51 for the second side plate 17. The operation will be not explained about the cartridge holder 24, steering member 25 and rack member 25 and rack member for the first side plate 16.

In the standby state before the cartridge 1 is inserted, as shown in Figs. 7A and 7B, the rack member 51 moves rightward according to the displacement between the engagement protrusions 39, 40 and the elliptical eccentric holes 52, 53. In addition, the engagement protrusions 33, 39, 40 and 41 as shown in Figs. 5A - 5C are limited by the engagement holes 45, 46 and 47, slanted guide hole 42 and inverted-L shaped guide hole 48. Thus, the cartridge holder 24 and steering meter 25 are at rest at a rightmost position for the first side plate 17.

In this state, it is assumed that the cartridge 1 is inserted horizontally in the cartridge holder 24 from the input/output position on the side of the driving roller 23 and further slightly squeezed therein against spring force of a spring. Then, the driving roller 23 automatically carries the cartridge 1 toward the back of the cartridge holder 24 in contact with the bottom face (back face) of the cartridge 1 and also opens the shutter 6.

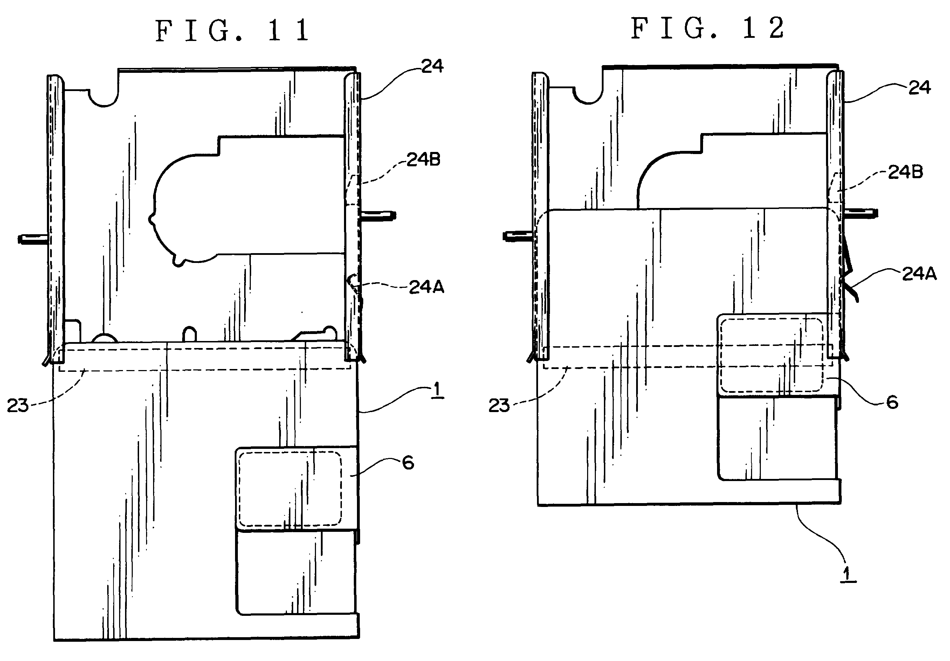

Figs. 11 - 15 are views for explaining the operation of the shutter 6.

Fig. 11 shows the state when the cartridge has been connected to the rear of the driving roller 23 so that carrying of the cartridge 1 into the cartridge holder 24 toward the inner part thereof has been started. In this state, the shutter 6 is still closed. The stopper 6A of the shutter 6 is engaged with the engagement concave portion 2E of the stopper portion 2F of the cartridge case 2 so that the shutter 6 is secured.

When the cartridge 1 is transported toward the cartridge holder 24, as shown in Fig. 12, the tip of the shutter 6 is brought into contact with the engagement spring 24A of the cartridge holder 24. The engagement spring 24A is pulled up as the cartridge 1 is moved, and slides along the side of the shutter 6. Then, the driving roller 23 is brought into contact with the shutter 6 so that the shutter 6 remains at the closed position. Therefore, the shutter 6 does not slide owing to the rotary force of the driving roller 23.

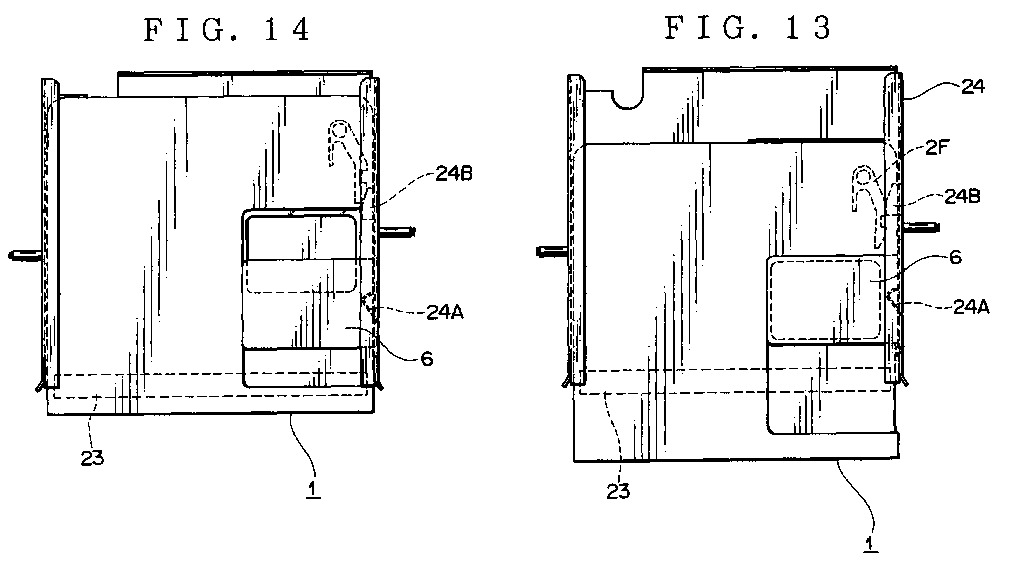

When the cartridge 1 is further transported, as shown in Fig. 13, the shutter 6 secured at the closed position goes beyond the driving roller 23. Thereafter, the engagement releasing piece 24B is brought into contact with the slanted surface 2H of the stopper portion 2F so that the slanted plane 2H is pressed down as the cartridge is moved. As a result, the stopper 6A of the shutter 6 is disengaged from the engagement concave portion 2E of the stopper portion 2F. Further, when the cartridge 1 is further moved, the tip of the engagement releasing piece 24B of the cartridge holder 24 is brought into contact with the side end of the shutter 6 and the engagement spring 24A of the cartridge holder 24 is engaged with the engagement hole 6B of the shutter 6.

When the cartridge 1 is further transported, as shown in Fig. 14, since the engagement spring 24A of the cartridge holder 22 remains fit in the engagement hole 6B of the shutter 5, the shutter 6 is moved in its opening direction.

The driving roller 23 is located at a position free from the operation of opening the shutter. Specifically, the driving roller 23 is located at the position past the contact with the shutter 6 when the opening operation of the shutter is started so that the driving roller 23 does not hinder the opening operation of the shutter 6.

When the cartridge is further transported, the shutter 6 is moved together with the cartridge 1 so that the shutter 6 is completely opened.

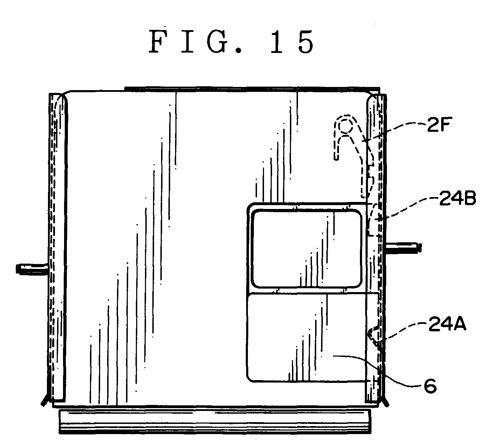

Where the cartridge 1 is carried out from the cartridge holder 24, the operation reverse to the operation explained in Figs. 15 - 11 is made from the state of Fig. 15 so that the cartridge 1 is carried out and the shutter 6 covers the opening 5. Incidentally, as shown in Fig. 14, because the engagement spring 24A of the cartridge holder 22 remains fit in the engagement hole 6B of the shutter 6, the shutter 6 can be moved to cover the opening 5 together with the cartridge 1.

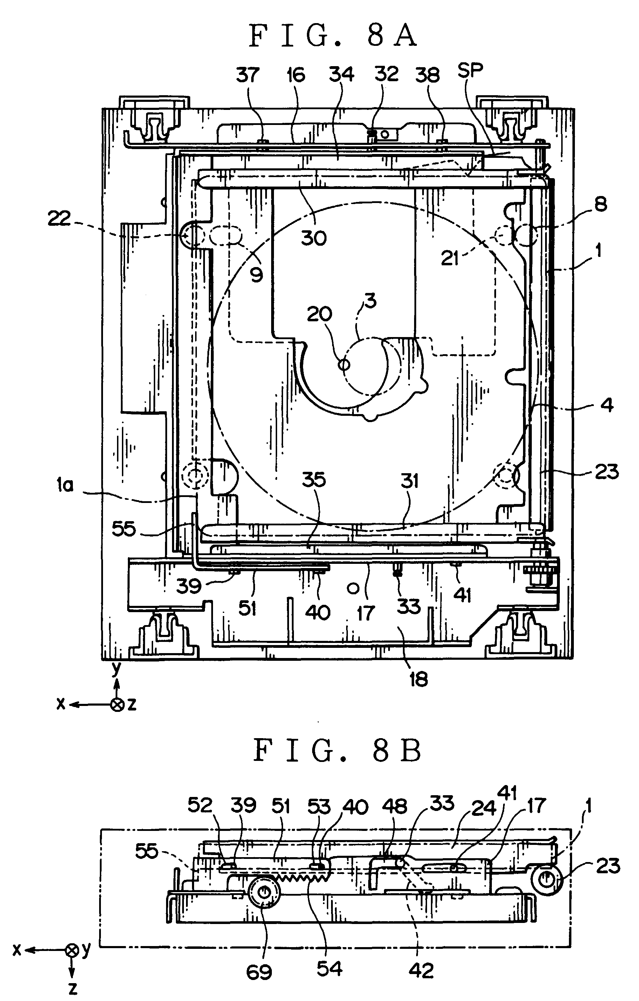

When the cartridge 1 is carried in by the driving roller 23, as shown in Figs. 8A and 8B, the tip of the cartridge 1 is brought into contact with the contact portion 55 so that the rack 51 is moved leftward in the figure. Thus, the rack member 51 moves leftwards by a maximum distance over which the engagement protrusions 39, 40 can move within the eccentric holes 52, 53, respectively.

When the rack member 51 has been moved, the gear portion 54 is engaged with the gear 69 which is being normally rotated under driving force by a driving motor 56. Thus, the rack member 51 is pulled out leftward by the gear 69 in the figure.

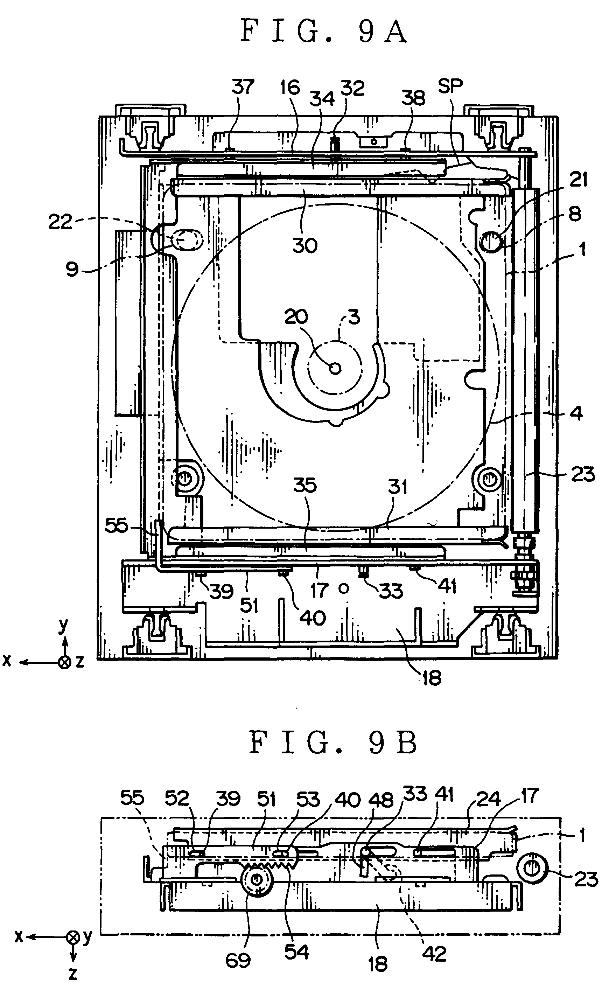

When the rack member 51 is moved by the gear 69, as shown in Figs. 9A and 9B, the steering member 25 is also pulled leftward as the engagement projections 39, 40 fit in the eccentric holes 2, 3 are moved. The engagement protrusion 33 fit in the slanted hole 42 and inverted-L shaped guide hole 48 is moved leftward together with the steering member 25 so that the cartridge holder 24 is pulled leftward.

The cartridge holder 24 is moved horizontally until the engagement projection 33 reaches the leftmost position of the inverted-L guide hole 48. Thus, the cartridge 1 inserted in the cartridge holder 24 is carried into the position immediately above the turn table.

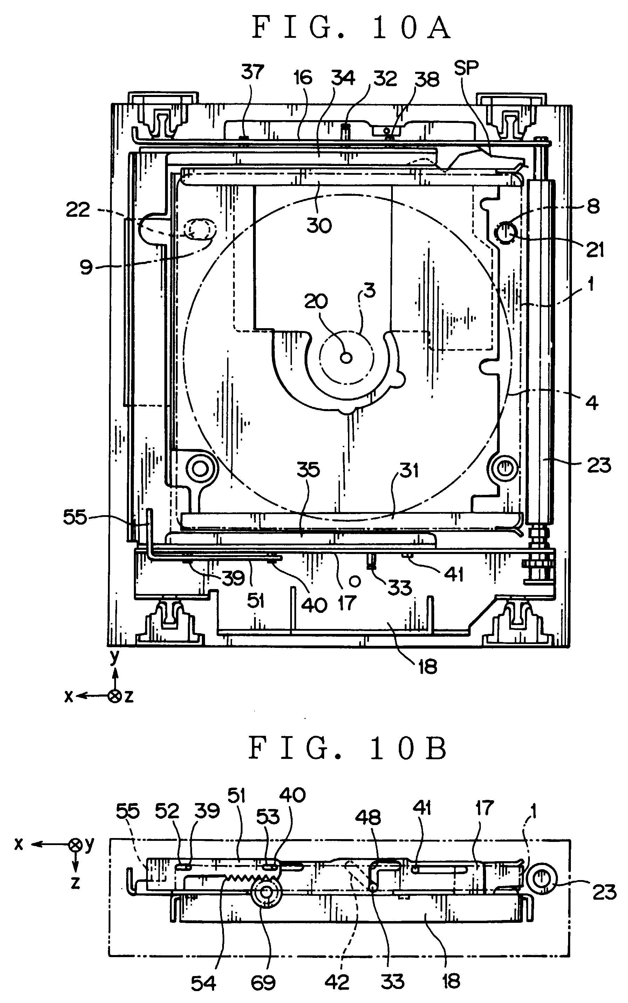

As shown in Figs. 10A and 10B, the rack 51 is pulled leftward by the gear 69 and the steering member 25 is successively leftward in the figure. Correspondingly, the engagement protrusion 33 is moved in a direction defined by the slanted hole 42 and inverted-L shape guide hole 48, i.e. z-direction. Thus, the cartridge holder 24 is forcibly descended toward the bottom wall of the hard plate 11. The clamping region 3 of the cartridge 1 is loaded on the turn table so that it is aligned with the rotary center position 20. The cartridge 1 is loaded surely and accurately in a prescribed recording/reproducing position since the positioning protrusions 21 and 22 uprighted from the hard frame 11 are fit in the positioning holes 8 and 9.

When the loading of the cartridge 1 is detected by a micro-switch (not shown) or the like, the power supply to the driving motor 56 is stopped. Thus, information can be recorded in or reproduced from the recording/reproducing medium 4.

Referring to Figs. 7 - 11, an explanation will be given of the unloading operation of the cartridge transporting device 10.

When a user operates a switch (not shown) for unloading with the cartridge 1 loaded in the recording/reproducing position as shown in Figs. 7A and 7B, power supply is started for rotating the driving motor 56 inversely. Thus, the gear 69 and the driving roller 23 are rotated inversely.

When the gear 69 rotates inversely, the rack member 51 and steering member 25 are moved rightward. Thus, the engagement projection 33 is moved upward in the z-direction under the control by the slanted guide hole 42 and inverted-L shaped guide hole 48. Simultaneously, the cartridge holder 24 is lifted, which results in the state shown in Figs. 9A and 9B.

The rack member 51 and steering member 25 are moved rightwards by the gear 69. Then, the engagement projection 33 is moved rightward along the inverted-L shaped guide hole 48. Accordingly, as shown in Figs. 8A and 8B, the cartridge holder 24 is moved at the most movable right limit.

As shown in Figs. 7A and 7B, since the gear 69 leaves from the gear portion 54 of the rack member 51, the cartridge holder 24 and steering member 25 are stopped. In this case, as shown in Figs. 10 - 8, while the gear 69 shifts the rack member 51 rightward, the contact portion pushes the tip 1a rightward. Therefore, in the state as shown in Fig. 7, the cartridge 1 is brought into contact with the driving roller 23 and will be automatically carried out to the side of input/output side.

In accordance with this embodiment, since there is provided the driving roller 23 in contact with the rear of the cartridge 1, the contact area between the cartridge 1 and driving roller 23 is increased, thereby improving the reliability of transportation. Further, the increase in the contact area between the cartridge 1 and driving roller 23 greatly reduces the aberration of the contact face of the driving roller 23. Since the cartridge 1 can be transported with the driving roller 23 not being in contact with the sliding shutter 6, an accident that the sliding shutter 6 is inadvertently opened during transportation to injure the recording/reproducing medium 4 can be prevented.

Thus, the cartridge can be transported to a prescribed recording/reproducing position surely and accurately.

In this embodiment, the driving roller 23 carries in/out the cartridge 1 while it is kept in contact with the shutter 6. However, the driving roller 23, which is shortened, may be located on the second side plate so that the driving roller is not in contact with the shutter 6.

In this embodiment, the driving roller 23 carries in/out the cartridge 1 which it is kept in contact with the lower surface of the cartridge 1. However, the driving roller 23 may carry in/out the cartridge 1 while it is in contact with the upper surface of the cartridge 1.

In this embodiment, the single driving roller 23 was provided in order to carry in/out the cartridge 1. Another driving roller which is opposite to the driving roller may be provided for this purpose. In such a structure, the cartridge 1 can be carried in/out while it is sandwiched between both driving rollers.

The inverted L-shaped guide hole 48 and slanted guide hole 42 should not be limited to the shapes as shown in Figs. 5C and 5B, respectively. Specifically, where the cartridge holder 24 is to be clamped upward in the z-direction, the guide hole 48 is formed in an L-shape instead of the inverted L-shape, and the slanted guide hole 42 is formed in a shape ascending from left toward right instead of the shape descending from left toward right.

In this embodiment, using the inverted L-shaped guide hole 48 and slanted guide hole 42, the cartridge holder 24 was moved the x-direction and z-direction. However, the cartridge holder 24 may be moved in only the x-direction, and instead of the movement in the z-direction of the cartridge holder 24, a reproducing means (not shown) may be risen in the z-direction.

In this embodiment, the present invention was applied to the reproducing means. However, the present invention can be applied to a recording/reproducing device equipped with a magnetic head for recording information.

## Claims

1. A cartridge transporting apparatus comprising:
a cartridge holder for loading a cartridge with a recording medium which is inserted from an inlet;
a reproducing means including a turn table and a pick-up, said cartridge holder and said reproducing means being moved relatively so that the cartridge loaded in the cartridge holder can be reproduced;
a driving roller, provided in the vicinity of said insertion opening, for transporting said cartridge in its contact with a lower face or upper surface of the cartridge into said cartridge holder,
a shutter opening/closing means engaged with a shutter covering an opening of said cartridge, for opening/closing said shutter as said cartridge is moved,
wherein said driving roller is located at a position where it is not brought in contact with the shutter when said shutter is engaged with said shutter opening/closing means.

2. A cartridge transporting apparatus comprising:
a cartridge holder for loading a cartridge with a recording medium which is inserted from an inlet;
a reproducing means including a turn table and a pick-up, said cartridge holder and said reproducing means being moved relatively so that the cartridge loaded in the cartridge holder can be reproduced;
a driving roller, provided in the vicinity of said insertion opening, for transporting said cartridge in its contact with a lower face or upper surface of the cartridge into said cartridge holder,
a shutter opening/closing means engaged with a shutter covering an opening of said cartridge, for opening/closing said shutter as said cartridge is moved,
wherein said driving roller is located at a position where it is brought in contact with the shutter after said shutter passes said driving roller.

3. A cartridge transporting apparatus according to claim 1, wherein said shutter opening/closing means is attached to said cartridge holder.

4. A cartridge transporting apparatus according to claim 1, wherein said cartridge has an engagement means for stopping movement of the shutter, and said cartridge holder has an engagement releasing means for releasing the engagement means.

5. A cartridge transporting apparatus according to claim 1, wherein said driving roller is extended in a direction substantially perpendicular to a direction of transporting said cartridge into said cartridge holder.

6. A cartridge transporting apparatus according to claim 1, wherein said driving roller has a length to be in contact with said shutter.

7. A cartridge transporting apparatus according to claim 2, wherein said shutter opening/closing means is attached to said cartridge holder.

8. A cartridge transporting apparatus according to claim 2, wherein said cartridge has an engagement means for stopping movement of the shutter, and said cartridge holder has an engagement releasing means for releasing the engagement means.

9. A cartridge transporting apparatus according to claim 2, wherein said driving roller is extended in a direction substantially perpendicular to a direction of transporting said cartridge into said cartridge holder.

10. A cartridge transporting apparatus according to claim 2, wherein said driving roller has a length to be in contact with said shutter.
